# EUROPÄISCHE PATENTSCHRIFT

(11) **EP 1 886 263 B1**
(45) Veröffentlichungstag und Bekanntmachung des Hinweises auf die Patenterteilung: **08.04.2015**
(21) Anmeldenummer: 06753232.5
(22) Anmeldetag: 01.06.2006
(51) Int. Cl.: G06K 19/077, H01Q 1/22, H01Q 13/10

(54) **ANORDNUNG MIT TRANSPONDER UND METALLISCHEM ELEMENT**
ARRANGEMENT WITH A TRANSPONDER AND A METAL ELEMENT
SYSTEME COMPORTANT UN TRANSPONDEUR ET UN ELEMENT METALLIQUE

(30) Priorität: 01.06.2005 DE 202005008891 U; 02.11.2005 DE 202005017229 U; 29.11.2005 DE 202005018589 U; 19.01.2006 DE 202006000902 U; 07.03.2006 DE 202006003721 U; 16.03.2006 DE 202006004369 U
(43) Veröffentlichungstag der Anmeldung: 13.02.2008
(73) Patentinhaber: Zissel, Hardy, 15711 Königs Wusterhausen (DE)
(72) Erfinder: Zissel, Hardy, 15711 Königs Wusterhausen (DE)
(74) Vertreter: Bittner, Thomas L.
(86) Internationale Anmeldenummer: PCT/DE2006/000956
(87) Internationale Veröffentlichungsnummer: WO 2006/128448

(56) Entgegenhaltungen:
- EP-A- 1 541 795
- WO-A-02/07085
- WO-A-2006/057820
- DE-A1- 10 227 681
- US-A- 5 767 789
- US-A1- 2002 177 408

## Beschreibung

Die Erfindung betrifft eine Anordnung mit einem Transponder und einem dem Transponder zugeordneten metallischen Bauteil.

### Hintergrund der Erfindung

In vielen Geschäftsbereichen, insbesondere im Bereich der Logistik, werden zur Kennzeichnung und späterer Identifizierung von Waren und anderen Gegenständen sogenannte Transponder eingesetzt. Hierbei handelt es sich um Kommunikationsgeräte, welche in der Lage sind, mit einer Kommunikationsvorrichtung zu kommunizieren. Die Kommunikation erfolgt hierbei vorzugsweise drahtlos. Bei einer oft eingesetzten Form eines Transponders findet die Kommunikation mittels Hochfrequenz- oder Funksignalen statt. Derartige Transponder werden als Hochfrequenztransponder bezeichnet. Wenn diese für Identifizierungszwecke gestaltet sind, handelt es sich um sogenannte RFID-Transponder (RFID - "Radio Frequency Identification", Hochfrequenzidentifikation).

Ein RFID-Transponder umfaßt in der Regel einen Transponder-Chip und eine Antenne. Mittels der Antenne werden elektromagnetische Signale empfangen und in elektrische Signale umgewandelt, welche dann über eine Verbindung zwischen der Antenne und dem Transponder-Chip an letzteren übertragen werden. Die elektrischen Signale können dann im Transponder-Chip ausgewertet werden, um eine Information beispielsweise über eine Identifikationsanfrage zu erhalten. Anschließend erzeugt der Transponder-Chip als Antwort auf die Identifikationsanfrage weitere elektrische Signale, welche an die Antenne übertragen und von dieser in abstrahlbare elektromagnetische Signale umgewandelt werden.

Das Dokument DE 202 14 099 U1 offenbart einen Getränkebehälter, an dem ein derartiger Transponder befestigt ist, welcher Informationen über den Getränkebehälter und seinen Inhalt gespeichert hat. In dem Dokument DE 298 21 877 U1 werden Verpackungsbehälter beschrieben, an denen jeweils mittels einer speziellen Halterung ein Transponder befestigt ist. Es werden Halterungen vorgestellt, welche ein sicheres, möglichst stoßfreies Halten des Transponders am Verpackungsbehälter sicherstellt.

Gegenüber einer Kennzeichnung von Gegenständen mittels nicht-elektronischer Mittel, beispielsweise mittels Barcode, haben RFID-Transponder den Vorteil, daß sie mittels der Kommunikationsvorrichtung auch dann über eine Hochfrequenzverbindung kommunizieren können, wenn der RFID-Transponder im Gegenstand angeordnet oder anderweitig verdeckt ist, so daß eine visuelle Identifizierung nicht möglich ist. Ferner kann eine im RFID-Transponder gespeicherte Information jederzeit geändert oder ergänzt werden.

Wenn der zu kennzeichnende Gegenstand jedoch ein metallisches Bauteil umfaßt oder gar gänzlich aus Metall gebildet ist, kann es zu einer Beeinträchtigung der Funktion des Transponder kommen, da das metallische Bauteil zumindest einen Teil der elektromagnetischen Energie aus den zu empfangenden oder zu sendenden elektromagnetischen Signale absorbiert. Wenn beispielsweise ein Transponder in einem geschlossenen metallischen Behälter angeordnet ist, so bildet der metallische Behälter einen Faraday-Käfig, welcher eine Kommunikation zwischen dem Transponder und einer außenstehenden Vorrichtung im Wesentlichen unterdrückt.

Um das Problem der Funktionsbeeinträchtigung durch das metallische Bauteil zu lösen wird versucht, den Transponder oder zumindest seine Antenne möglichst so zu befestigen, daß ein maximaler Abstand zwischen dem metallischen Bauteil und der Antenne vorhanden ist. Dies wird beispielsweise durch Befestigen des Transponders auf einer Oberfläche des metallischen Bauteils mittels eines sehr dicken Haftfilms erreicht. Die Ergebnisse einer derartigen Vorgehensweise lassen jedoch zu wünschen übrig, zumal das Anbringen einer dicken Haftschicht dazu führt, daß der Transponder von der Oberfläche des metallischen Bauteils absteht.

Das Dokument WO 02/07085 A beschreibt ein Gerät zur drahtlosen Kommunikation mittels einer Stabantenne in einer ersten Betriebsart und mittels einer Schlitzantenne in einer zweiten Betriebsart.

Das Dokument US 2002/177408 A1 betrifft einen Transponder, der Informationen über einen Container kommunizieren soll.

Das Dokument DE 102 276 81 A1 offenbart ein Verfahren zur Anbringung eines Transponders an einem Behälter aus Metall und ein Transpondermodul, welches für die Durchführung des Verfahrens geeignet ist.

### Die Erfindung

Es ist Aufgabe der Erfindung, eine Anordnung mit einem Transponder und einem metallischen Bauteil bereitzustellen, bei der eine verbesserte Kommunikation zwischen dem Transponder und einer vom Transponder getrennten Kommunikationsvorrichtung gewährleistet ist. Es soll somit die Beeinträchtigung der Funktion des Transponders minimiert werden, die beim Anordnen des Transponders nahe einem metallischen Bauteil herkömmlich auftreten kann.

Erfindungsgemäß wird die vorstehende Aufgabe mit einer Anordnung nach dem unabhängigen Anspruch 1 gelöst. Gegenüber dem Stand der Technik hat das Bilden der Antenne mittels einer Vertiefung im metallischen Bauteil den Vorteil, daß die Abstrahlcharakteristik der Antenne im wesentlichen durch die Ausgestaltung der Vertiefung bestimmbar ist. Derartige Antennen können ferner mit weiteren metallischen Bauteilen elektrisch verbunden sein, ohne daß hierdurch die Abstrahlcharakteristik wesentlich beeinflusst wird.

Bei der Erfindung ist eine der Vertiefung zugeordnete Abdeckung vorgesehen, wobei die Vertiefung zumindest teilweise mit einem Durchbruch im metallischen Bauteil gebildet ist.

Auch ist ein Hohlraum vorgesehen, welcher von der Abdeckung und dem metallischen Bauteil gebildet wird und der mit einem dielektrischen Material zumindest teilweise gefüllt ist.

Die Abdeckung umfasst ein metallisches Material oder in einer bevorzugten Ausbildungsform eine Kombination der folgenden Materialien: ein metallisches Material und ein nicht metallisches Material.

In einer zweckmäßigen Fortführung der Erfindung ist das dielektrische Material im Hohlraum aus dem gleichen Material gebildet wie die Abdeckung.

In einer Weiterbildung der Erfindung sind / ist die Abdeckung und / oder das dielektrische Material im Hohlraum als eine Abschirmung gebildet.

In einer vorteilhaften Weiterbildung der Erfindung sind die mittels der Vertiefung im metallischen Bauteil gebildete Antenne als Hochfrequenzantenne und der Transponder als Hochfrequenztransponder ausgeführt.

In einer bevorzugten Ausbildungsform der Erfindung ist vorgesehen, daß der Transponder am metallischen Bauteil befestigt ist. Die Befestigung kann mittels Haft- oder Klebemittel erfolgt sein. Die Befestigung kann jedoch auch mittels einer anderen geeigneten Befestigungsmethode, beispielsweise mittels Klemmen, Schrauben und / oder Löten, erfolgen.

In einer zweckmäßigen Ausführungsform der Erfindung bedeckt der Transponder wenigstens teilweise die Vertiefung.

In einer zweckmäßigen Fortführung der Erfindung weist die Vertiefung im metallischen Bauteil eine gestreckte Form auf. Hierbei weist die Vertiefung eine Länge auf, welche bevorzugterweise etwa 5 % kürzer ist, als die halbe Wellenlänge der Frequenz, für welche die Antenne ausgelegt ist. Ferner beträgt die Breite der Vertiefung die einfache bis doppelte Stärke des für das metallische Bauteil verwendeten Materials. Die Bandbreite der Antenne kann erhöht werden, indem die Breite der Vertiefung zumindest in der Nähe von Endbereichen der gestreckten Form vergrößert ist.

In einer bevorzugten Ausbildungsform der Erfindung weist die Vertiefung im metallischen Bauteil die Form eines Ringsegmentes auf.

In einer vorteilhaften Ausführungsform der Erfindung ist zwischen dem Transponder und der mittels der Vertiefung im metallischen Bauteil gebildeten Antenne eine Verbindung zum Übertragen von Signalen zwischen dem Transponder und der Antenne gebildet.

In einer zweckmäßigen Weiterbildung der Erfindung umfaßt die Verbindung eine kapazitive und / oder eine induktive Verbindung. In dieser Ausführungsform kann der Transponder vom metallischen Bauteil galvanisch getrennt sein.

In einer vorteilhaften Fortführung der Erfindung ist vorgesehen, daß die Verbindung mittels Kontakten gebildet ist.

In einer bevorzugten Ausbildungsform der Erfindung umfaßt die Verbindung ein Koaxialkabel.

In einer vorteilhaften Ausführungsform der Erfindung ist der Transponder zumindest teilweise in der Vertiefung im metallischen Bauteil angeordnet.

Der Transponder ist in einer bevorzugten Weiterbildung der Erfindung vollständig in der Vertiefung im metallischen Bauteil versenkt.

In einer zweckmäßigen Fortführung der Erfindung ist vorgesehen, daß die Vertiefung im metallischen Bauteil mit einem nichtleitenden Material teilweise oder vollständig aufgefüllt ist.

Die Vertiefung im metallischen Bauteil ist in einer bevorzugten Ausbildungsform der Erfindung mit dem nichtleitenden Material zumindest bis zu einer Dicke aufgefüllt, die ein Fünfzigstel so groß ist, wie die Wellenlänge der elektromagnetischen Signale, für welche die mittels der Vertiefung im metallischen Bauteil gebildete Antenne ausgelegt ist.

In einer zweckmäßigen Auführungsform der Erfindung ist das metallische Bauteil mit der Vertiefung Teil eines rohrförmigen Bauteils. Das rohrförmige Bauteil kann beispielsweise Teil eines Fahrradrahmens sein, welches durch im Transponder gespeicherte Daten identifizierbar ist. Dies kann beispielsweise bei der Ortung eines gestohlenen Fahrrades von Nutzen sein.

In einer vorteilhaften Weiterbildung der Erfindung ist die Vertiefung entlang der Längsachse des rohrförmigen Bauteils gebildet.

In einer bevorzugten Fortführung der Erfindung ist das metallische Bauteil mit der Vertiefung Teil eines Behälters. Hierbei kann jede Form von Behälter in Frage kommen, beispielsweise Getränkebehälter, Behälter für elektronische Schaltungen, Troge für Akkumulatoren usw. Auf diese Weise ist es möglich, die derart mit einem Transponder bestückten Behälter zu Orten. Es können in dem Transponder auch Informationen betreffend den Inhalt und die Umgebungsbedingungen des Behälters gespeichert und später abgefragt werden.

In einer zweckmäßigen Ausbildungsform der Erfindung ist vorgesehen, daß der Behälter eine Gitterbox umfaßt.

In einer vorteilhaften Ausführungsform der Erfindung ist der Behälter ein Getränkefaß.

In einer bevorzugten Weiterbildung der Erfindung ist das metallische Bauteil mit der Vertiefung Teil eines Kraftfahrzeugkennzeichens.

In einer vorteilhaften Fortführung der Erfindung umfaßt der Transponder eine weitere Antenne.

### Beschreibung bevorzugter Ausführungsbeispiele der Erfindung

Die Erfindung wird im folgenden anhand von Ausführungsbeispielen unter Bezugnahme auf Figuren einer Zeichnung näher erläutert. Hierbei zeigen:
- Fig. 1: eine Querschnittsansicht auf eine Anordnung mit einem Transponder und einem metallischen Bauteil;
- Fig. 2: eine Querschnittsansicht auf eine weitere Anordnung mit einem metallischen Element und einem Transponder;
- Fig. 3: eine Draufsicht auf ein metallisches Bauteil mit einer gestreckten Vertiefung;
- Fig. 4: eine Draufsicht auf ein metallisches Bauteil mit einer ringsegmentförmigen Vertiefung;
- Fig. 5: eine Draufsicht auf ein metallisches Bauteil mit einer Vertiefung und einem abgesenkten Bereich;
- Fig. 6: eine Draufsicht auf ein weiteres metallisches Bauteil mit einer Vertiefung und einem abgesenkten Bereich;
- Fig. 7: eine Querschnittsansicht auf ein metallisches Bauteil mit einem Durchbruch und einer Abdeckung;
- Fig. 8: eine Querschnittsansicht auf ein weiteres metallisches Bauteil mit einem Durchbruch und einer Abdeckung;
- Fig. 9: eine Anordnung mit einem Transponder und einem rohrförmigen Bauteil;
- Fig. 10: ein Kraftfahrzeugkennzeichen mit einer Vertiefung;
- Fig. 11: eine Gitterbox mit zwei metallischen Bauteilen mit Vertiefungen;
- Fig. 12a: eine Draufsicht auf die Vertiefung in einem der metallischen Bauteile aus der Fig. 11;
- Fig. 12b: eine Querschnittsansicht auf die Vertiefung in einem der metallischen Bauteile aus der Fig. 11;
- Fig. 13: eine Draufsicht auf die Vertiefung in dem zweiten der metallischen Bauteile aus der Fig. 11;
- Fig. 14: ein Getränkefaß mit einer metallischen Außenwand mit einer Vertiefung;
- Fig. 15a: ein Getränkefaß mit einem Verschluß mit einer Antennenstruktur; und
- Fig. 15b: eine Detailansicht auf die Antennenstruktur des Verschlusses aus der Fig. 15a.

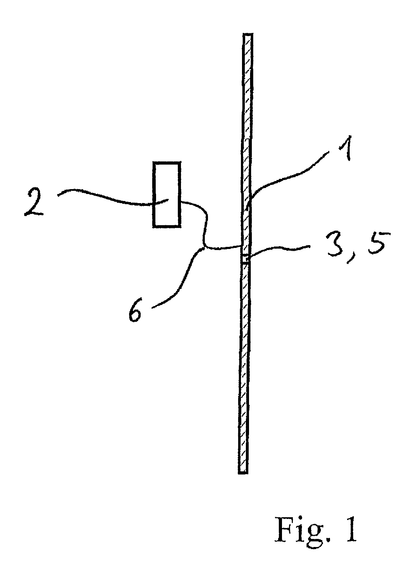

Die Fig. 1 zeigt eine Querschnittsansicht einer Anordnung mit einem Transponder 2 und einem metallischen Bauteil 1. In dem metallischen Bauteil 1 ist eine Vertiefung 3 gebildet. Mittels der Vertiefung 3 im metallischen Bauteil 1 ist eine Antenne für den Transponder 2 gebildet, welcher mit dieser Antenne mittel einer Verbindung 6 verbunden ist. Die hier dargestellte Verbindung 6 ist eine Verbindung 6 mittels einer elektrischen Leitung. Die Verbindung 6 kann jedoch eine beliebige Verbindung umfassen, über welche ein Austausch von Signalen zwischen dem Transponder 2 und der Antenne erfolgen kann. Beispielsweise kann die Verbindung 6 eine kapazitive und / oder eine induktive Kopplung umfassen.

Die in der Fig. 1 dargestellte Vertiefung 3 erstreckt sich über die gesamte Dicke des metallischen Bauteils 1 und bildet somit einen Durchbruch 5 im metallischen Bauteil 1. Vereinfacht kann die Funktionsweise bei einer derartigen Antenne, welche mittels eines Durchbruchs 5 in einem metallischen Bauteil 1 gebildet ist folgendermaßen erläutern. Im Wesentlichen stellt der Durchbruch 5 ein negatives Abbild einer Dipolantenne dar. Das bedeutet dort, wo bei einem Stabdipol oder Gaußschem Dipol Metall ist, ist hier keines und wo um den Stabdipol herum kein Metall ist, ist hier das Metall des metallischen Bauteils 1. Dieser "negative" Aufbau bringt eine Vertauschung der Polarisierungsrichtung mit sich. Die Polarität des elektrischen Feldes (E-Feldes) und des Magnetfeldes (H-Feldes) eines von der Antenne abgestrahlten oder von ihr empfangenen elektromagnetischen Signals ist also gegenüber den Verhältnissen bei einem Stabdipol vertauscht. Diese Eigenschaft der Antenne kann bei der Ausrichtung einer Antenne eines als Lese- und Schreibgerät verwendeten Kommunikationsgerätes berücksichtigt werden. Um die Polarisierung zu ändern, kann die Form des Durchbruchs 5 gekrümmt ausgeführt werden.

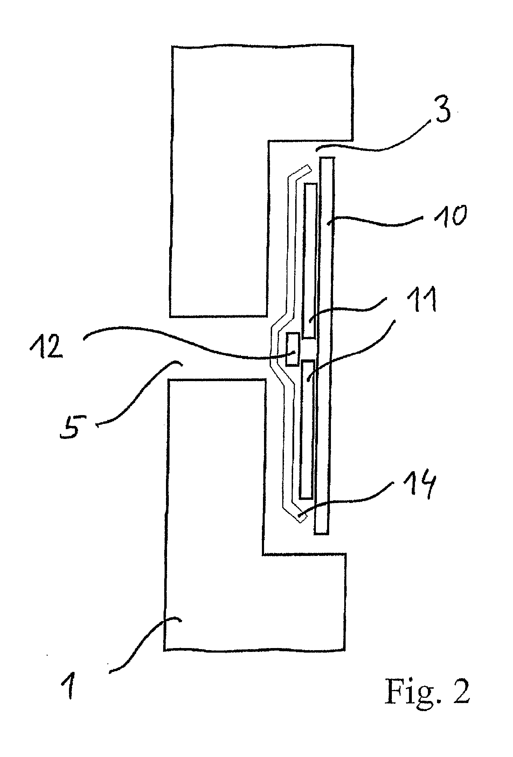

In der Fig. 2 wird eine Querschnittsansicht auf eine weitere Anordnung mit einem metallischen Bauteil 1 und einem Transponder 2 dargestellt. Das metallische Bauteil 1 weist eine Vertiefung 3 auf, welche lediglich zum Teil als ein Durchbruch 5 ausgeführt ist. Der Transponder 2 umfaßt ein Substrat 10 aus einem nichtleitenden Material und einen Transponder-Chip 12. Ferner umfaßt der Transponder 2 flächige Metallelemente 11, mittels derer zwischen dem Transponder 2 und der mittels der Vertiefung 3 im metallischen Bauteil 1 gebildeten Antenne eine kapazitive Kopplung hergestellt ist. Die kapazitive Kopplung entsteht dadurch, daß die flächigen Metallelemente 11 mit dem metallischen Bauteil 1 einen Kondensator bilden.

Bei Gebrauch der Anordnung empfängt die Antenne elektromagnetische Signale von einem Kommunikationsgerät, beispielsweise einem mobilen Auslesegerät für RFID-Transponder. Die elektromagnetischen Signale werden mittels der Antenne in elektrische Signale umgewandelt und über die kapazitive Kopplung an den Transponder-Chip 12 übermittelt. Dieser kann die in den elektromagnetischen Signalen enthaltene Informationen, beispielsweise betreffend eine Identifikationsanfrage, verarbeiten und eine zugehörige Antwort generieren. Die Antwort wird wiederum über die mittels der kapazitiven Kopplung gebildeten Verbindung 6 zur Antenne übertragen und von dort abgestrahlt. Als Fläche für die flächigen Metallelemente 11 haben sich bei derzeit gängigen Transponder-Chips 12 für den UHF-Frequenzbereich etwa 20 mm² für jedes flächige Metallelement 11 als hinreichend erwiesen.

In dem Transponder 2 können Informationen über die geographische Position der metallischen Bauteiles 1 gespeichert sein. Die Übertragung dieser Informationen mittels elektromagnetischer Signale kann über Funknetze, insbesondere Mobilfunknetze, beispielsweise über ein GSM-Netz, ein UMTS-Netz oder ähnlichem erfolgen.

Der Transponder 2 ist vollständig in der Vertiefung 3 angeordnet und dort mittels einer Haftschicht 14 am metallischen Bauteil 1 befestigt. In einer Ausführungsform durchstoßen die flächigen Metallelemente 11 beim Anbringen des Transponders 2 die Haftschicht 14, so daß ein galvanischer Kontakt entsteht, der sich förderlich hinsichtlich der Verbindung 6 zwischen der Antenne und dem Transponder 2 auswirkt. Diese Art der Befestigung hat den Vorteil, daß der Transponder 2 in Form vorgefertigter Module automatisiert oder von Hand auf einfache Weise von einer Rolle abgenommen und sicher am metallischen Bauteil 1 befestigt werden kann.

Da der Transponder 2 vollständig in der Vertiefung 3 angeordnet ist, ist sichergestellt, daß auf einer Oberfläche des metallischen Bauteils 1 kein Vorsprung entsteht. Um eine plane Oberfläche auf dem metallischen Bauteil 1 auch im Bereich der Vertiefung 3 zu erhalten, kann die Vertiefung mit einem elektrisch nicht leitenden Material aufgefüllt werden. Ein zumindest teilweises Auffüllen mit einem dielektrischen Material kann auch gewünscht sein, um die Verbindung 6 zwischen dem Transponder 2 und der Antenne und / oder das Abstrahlverhalten der Antenne zu beeinflussen. Schließlich kann durch das Auffüllen des Durchbruchs 5 ein fluid-undurchlässiges metallisches Bauteil 1 mit einer Vertiefung 3 geschaffen werden. Dies ist insbesondere bei metallischen Bauteilen 1 von Bedeutung, welche Teil eines Behälters, beispielsweise eines Getränkebehälters, sind.

Bei dem Transponder 2 kann es sich um jeden geeigneten Transponder handeln. Beispielsweise kommen sowohl passive als auch aktive Transponder in Frage. Außerdem kann eine zusätzliche Antenne nach einer für kommerzielle Transponder üblichen Art vorgesehen sein.

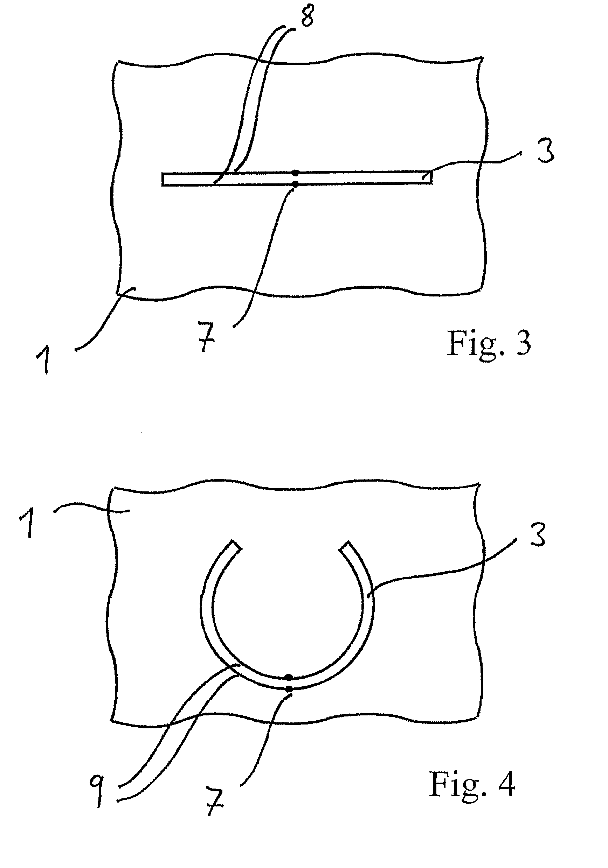

Die Fig. 3 und 4 zeigen jeweils eine Draufsicht auf eine Ausführungsform eines metallischen Bauteils 1 mit einer jeweils unterschiedlich ausgestalteten Vertiefung 3. Die Vertiefung 3 in der Fig. 3 ist als eine gestreckte Vertiefung ausgebildet, welche von zwei Längskanten 8 und zwei zu den Längskanten 8 senkrechten Kanten begrenzt ist. An jeder der Längskanten 8 ist ein Kontakt 7 gebildet. Mittels der Kontakte 7 wird ein Transponder 2 mit der Antenne verbunden, welche mittels der Vertiefung 3 im metallischen Bauteil 1 gebildet ist. Eine entsprechend der Fig. 3 gebildete Antenne wird im allgemeinen auch als Schlitzantenne bezeichnet. Bei einer derartigen Antenne ist die Abmessung der Vertiefung 3 in der Längsrichtung vorzugsweise um ein vielfaches größer als quer zur Längsrichtung. Ferner sollte die Abmessung quer zur Längsrichtung, das heißt die Breite der Vertiefung 3, in der Größenordnung der Dicke des metallischen Bauteils 1 liegen. Die Position der Kontakte 7 entlang der Längskanten 8 ist beliebig. Vorzugsweise ist jedoch jeder Kontakt 7 auf der zugehörigen Längskante 8 mittig angeordnet.

Das in der Fig. 4 dargestellte metallische Bauteil 1 unterscheidet sich von dem metallischen Bauteil 1 aus der Fig. 3 dadurch, daß die Vertiefung 3 einen ringsegmentförmigen Verlauf hat. Anstelle der Längskanten 8 der gestreckten Vertiefung 3 weist die ringsegmentförmige Vertiefung 3 kreissegmentförmige Kanten 9 auf. Auch in dieser Ausführungsform ist jeweils ein Kontakt 7 auf einer zugehörigen kreissegmentförmigen Kante 9, vorzugsweise mittig, angeordnet.

Neben den in den Fig. 3 und 4 dargestellten Beispielen für die Bildung der Antenne ist eine dritte Ausführungsform von grundlegender Bedeutung. Hierbei wird eine vom metallischen Bauteil isolierte Metallschicht (nicht dargestellt) in einen gestreckten Durchbruch 5 eingebracht, wobei der Abstand zwischen Rändern des Durchbruches 5 und der eingebrachten isolierten Metallschicht größer oder gleich der Dicke des metallischen Bauteils 1 ausgeführt ist. In diesem Fall können zur Ausbildung der Verbindung 6 zum Transponder 2 Kontakte 7 an einem Rand des Durchbruches 5 einerseits und an der isolierten Metallschicht andererseits angeordnet sein.

Die genannten drei grundlegenden Varianten zur Ausbildung der Antenne, nämlich Variante I: gestreckte Vertiefung 3, Variante II: ringsegmentförmig Vertiefung 3 und Variante III: gestreckte Vertiefung 3 mit isolierter Metallschicht (nicht dargestellt), weisen jeweils unterschiedliche Eigenschaften auf. Das von der Antenne nach Variante I abgestrahlte elektromagnetische Feld weist eine zur Längsrichtung der Vertiefung 3 um 90° gedrehte Polarisierungsrichtung des Feldes auf. Bei Variante II ist das elektromagnetische Feld unpolarisiert. Beide Varianten haben den Vorteil, daß sich die Anpassung an den Wellenwiderstand eines mit der Antenne verbundenen Kabels durch Verlagerung der Kontakte 7 entlang der Längsrichtung der Vertiefung 3 optimieren läßt. Variante III paßt von vornherein gut zu Kabeln und Transponder-Chips mit einem Wellenwiderstand von 50 Ohm.

Durch Auswahl der Größe und Form der Vertiefung 3 sowie des Materials des metallischen Bauteils 1 kann auf die Abstrahlcharakteristik der so gebildeten Antenne Einfluß genommen werden. Bei den in den Fig. 3 und 4 gezeigten Ausführungsformen bestimmt die Ausdehnung der Vertiefung 3 entlang der Längskanten 8 oder entlang der kreissegmentförmigen Kanten 9 die Frequenz, bei welcher die Antenne optimal arbeitet oder für welche die Antenne ausgelegt ist, während die Ausdehnung quer hierzu die Bandbreite der Antenne bestimmt. Die zur Auswahl stehenden Größen und Formen sind vielfältig und lediglich durch die Form und Größe des metallischen Bauteils 1 und die zur Verfügung stehenden Herstellungsmittel beschränkt.

Es kann vorgesehen sein, die Vertiefung 3 aufzufüllen. Wenn die Vertiefung 3 einen Durchbruch 5 durch das metallische Bauteil 1 umfaßt, kann durch das Auffüllen ein Fluid-Durchtritt durch den Durchbruch 5 verhindert werden. Das Auffüllen geschieht vorzugsweise mit einem nichtleitenden Verschlußmaterial. Bevorzugterweise wird die Vertiefung 3 vollständig gefüllt und darüber hinaus mit Verschlußmaterial so bedeckt, daß sich über der Vertiefung 3 eine Erhebung bildet. Die Erhebung hat vorzugsweise eine Länge, welche etwa 20% größer ist, als die Länge der Vertiefung und eine Breite, welche größer ist, als die Breite der Vertiefung. Das verwendete Verschlußmaterial kann eine Vergußmasse und / oder ein Formstück umfassen.

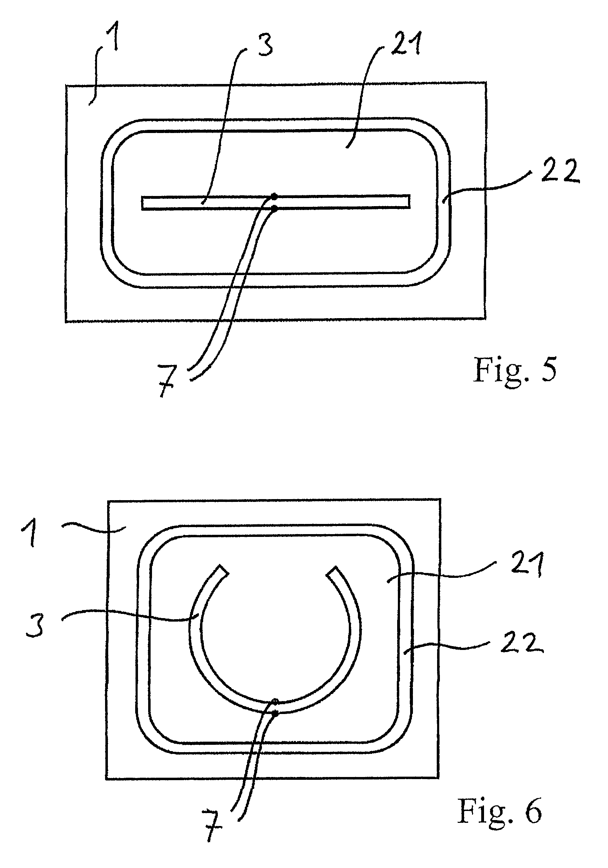

Die Fig. 5 zeigt ein metallisches Bauteil 1 mit einer Vertiefung 3 und einem abgesenkten Bereich 21 in Draufsicht. Der abgesenkte Bereich 21 ist mit einer umlaufenden Wand 22 umgeben und weist eine gestreckte Vertiefung 3 auf, welche im wesentlichen eine rechteckige Form hat. Das metallische Bauteil 1 kann beispielsweise zur Abdeckung von elektronischen Bauelementen oder ähnlichem verwendet werden. Beispielsweise kann das metallische Bauteil 1 Teil eines Abdeckbleches sein, welches bei elektronischen Baugruppen vorgesehen ist, die als Einschübe in Schränken montiert werden. Zur Erzeugung einer einheitlichen Abschlusses für die elektronischen Baugruppen sind solche Abdeckbleche als Frontplatte in einheitlicher Ebene gebildet. Aufgrund des abgesenkten Bereiches 21 ist ein Raum geschaffen, in welchem die elektronischen Bauelemente einer elektronischen Baugruppe angeordnet sein können. Ferner wird hierdurch ein Mindestabstand zwischen der mittels der Vertiefung 3 im metallischen Bauteil 1 gebildeten Antenne und den mittels des metallischen Bauteils 1 abgedeckten elektronischen Bauelementen gewährleistet. Für eine optimale Funktion der Antenne ist ein Mindestabstand von etwa 1/30 der Wellenlänge einer Arbeitsfrequenz, für welche die Antenne ausgelegt ist, wünschenswert.

Ein weiteres metallisches Bauteil 1 mit einer Vertiefung 3 und einem abgesenkten Bereich 21 ist in der Fig. 6 dargestellt. Das weitere metallische Bauteil 1 aus der Fig. 6 ist ähnlich gebildet wie das metallische Bauteil 1 aus der Fig. 5, wobei die Vertiefung 3 wie in der Fig. 4 als eine ringsegmentförmige Vertiefung ausgebildet ist.

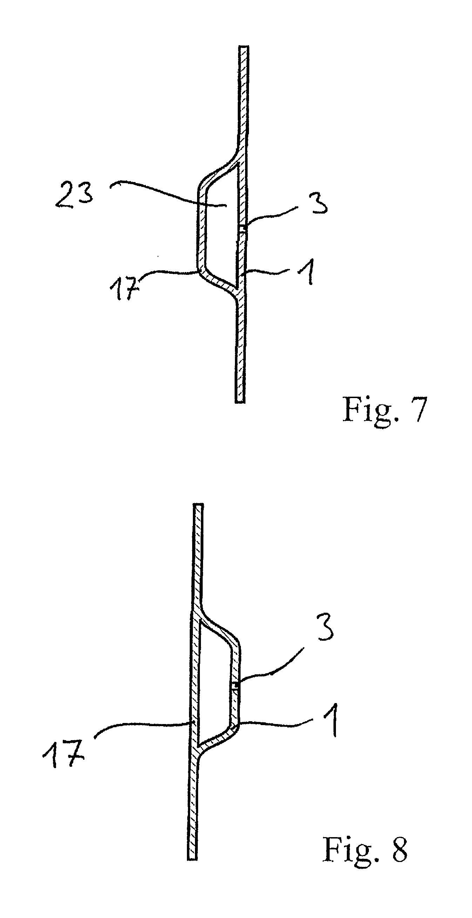

Die Fig. 7 und Fig. 8 veranschaulichen mittels Querschnittansichten zwei unterschiedliche Ansätze, um mittels einer Abdeckung 17 einen Hohlraum 23 zu bilden, welcher an einem Bereich des metallischen Bauteils 1 angrenzt, in dem die Vertiefung 3 gebildet ist. Dies ist insbesondere dann sinnvoll, wenn das metallische Bauteil 1 Teil einer Wand ist, die einen Innenbereich von einem Außenbereich abgrenzt, in welchen elektromagnetische Signale abgestrahlt oder aus welchem elektromagnetische Signale mittels der Antenne empfangen werden. Ist damit zu rechnen, daß die Bedingungen, beispielsweise die Temperatur oder die Luftfeuchtigkeit, im Innenraum variieren, werden mittels der Abdeckung 17 Arbeitspunktschwankungen eines im Hohlraum 23 angeordneten Transponders 2 aufgrund der variierenden Bedingungen vermindert oder sogar verhindert. Ferner wird hierdurch auch verhindert, daß bei Vorhandensein eines Stoffes im Innenbereich, beispielsweise eines Füllstoffes in einem Behälter, die Umgebung der Antenne verändert und somit ihre Abstrahlcharakteristik beeinflußt wird.

Der Hohlraum 23 ist vorzugsweise mit einem nichtleitenden Material, beispielsweise einem Kunststoff, aufgefüllt, um zusätzlich die Stabilität der Bedingungen im Hohlraum 23 und / oder die mechanische Festigkeit der Anordnung aus metallischem Bauteil 1 und Transponder 2 zu verbessern. Die in der Fig. 8 dargstellte Ausführungsform der Anordnung umfaßt ein metallisches Bauteil 1, welches ähnlich den Ausführungsformen aus den Fig. 5 und 6 mit einem abgesenkten Bereich 21 gebildet ist, in welchem wiederum die Vertiefung 3 gebildet ist.

In einer Ausführungsform kann die Abdeckung 17 ein nicht leitendes Material umfassen. Die am metallischen Bauteil 1 befestigte Abdeckung 17 ist jedoch vorzugsweise aus einem leitenden Material gebildet und mit dem metallischen Bauteil 1 elektrisch verbunden oder von diesem galvanisch getrennt. Mittels der Abdeckung 17 kann die mechanische Stabilität des metallischen Bauteils 1 erhöht werden, die aufgrund der Vertiefung 3 beeinträchtigt sein kann. Ferner kann durch Vorsehen eines geeigneten Materials und / oder einer geeigneten Struktur die Abdeckung 17 als eine Abschirmung gegen elektrische, magnetische und / oder elektromagnetische Störungen gebildet sein. Wenn das metallische Bauteil 1 mit dem Transponder 2 in der Nähe von Bauelementen angeordnet wird, welche durch abgestrahlte elektromagnetische Wellen in ihrer Funktion nachteilig beeinflußt werden, umfaßt die Abdeckung 17 vorteilhafterweise ein Ferritmaterial, welches vom Transponder 2 erzeugte elektromagnetische Wellen, insbesondere Hochfrequenzwellen, absorbiert.

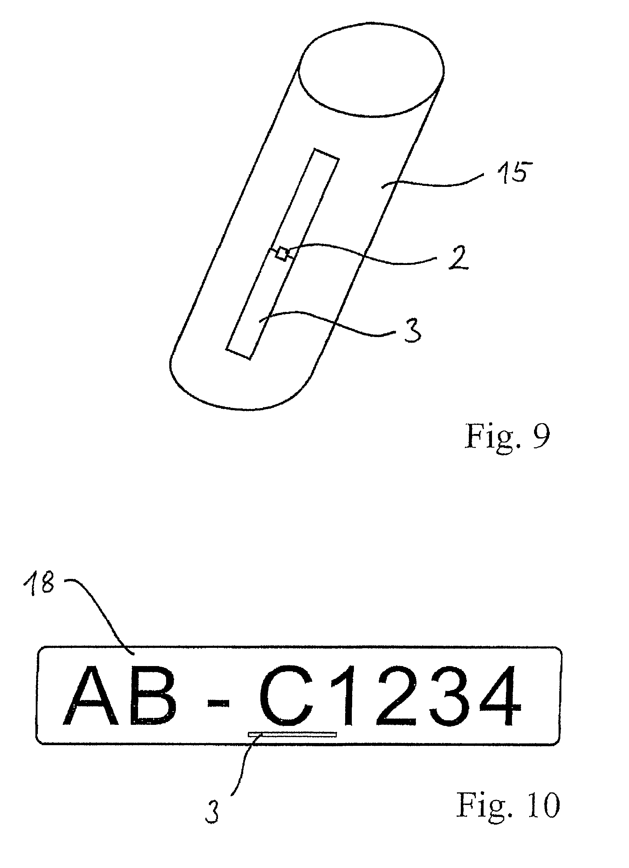

Die Fig. 9 zeigt eine Anordnung mit einem Transponder 2 und einem metallischen Bauteil 1, welches als Teil eines rohrförmigen Bauteils 15 ausgeführt ist. Das rohrförmige Bauteil 15 kann beispielsweise Teil eines mobilen oder feststehenden Tragegerüsts sein. Vorzugsweise ist es Teil eines Fahrradrahmens. In einer Umwandung des rohrförmigen Bauteils 15 ist eine gestreckte Vertiefung 3 gebildet, in welcher der Transponder 2 angeordnet ist. Die Vertiefung 3 weist eine Längsachse auf, welche entlang einer Längsachse des rohrförmigen Bauteils 15 gebildet ist. Sie kann jedoch auch eine andere zur Bildung einer Antenne geeignete Form aufweisen.

In der Fig. 10 ist ein Kraftfahrzeugkennzeichen 18 mit einer Vertiefung 3 dargestellt. Mittels der Vertiefung 3 im metallischen Blech des Kraftfahrzeugkennzeichens 18 ist eine Antenne für einen Transponder (nicht dargestellt) gebildet. Der Transponder kann am Kraftfahrzeugkennzeichen 18 befestigt sein. Beispielsweise kann er auf einer hinteren Fläche des Kraftfahrzeugkennzeichens 18 angeklebt oder in der Vertiefung 3 angeordnet sein. Die Vertiefung 3 ist als gestreckte Vertiefung 3 ausgebildet, kann jedoch eine beliebige, an die jeweiligen Randbedingungen angepaßte Form besitzen. Der Transponder kann Informationen zum Abruf bereithalten, die das Kraftfahrzeug, welches das Kraftfahrzeugkennzeichen 18 trägt, identifizieren. Zusätzlich zu einer visuellen Prüfung der Alphanumerischen Kennung auf der Oberfläche des Kraftfahrzeugkennzeichens 18 ist hiermit die Möglichkeit gegeben, eine Identifizierung mittels Auslesen des Transponders auf elektronischem Wege über verhältnismäßig große Entfernungen durchzuführen. In einem Speicher des Transponders können ferner Daten über das Kraftfahrzeug gespeichert sein, beispielsweise Herstellungsdaten, Informationen über durchgeführte und künftig durchzuführende Wartungsarbeiten am Kraftfahrzeug und ähnlichem.

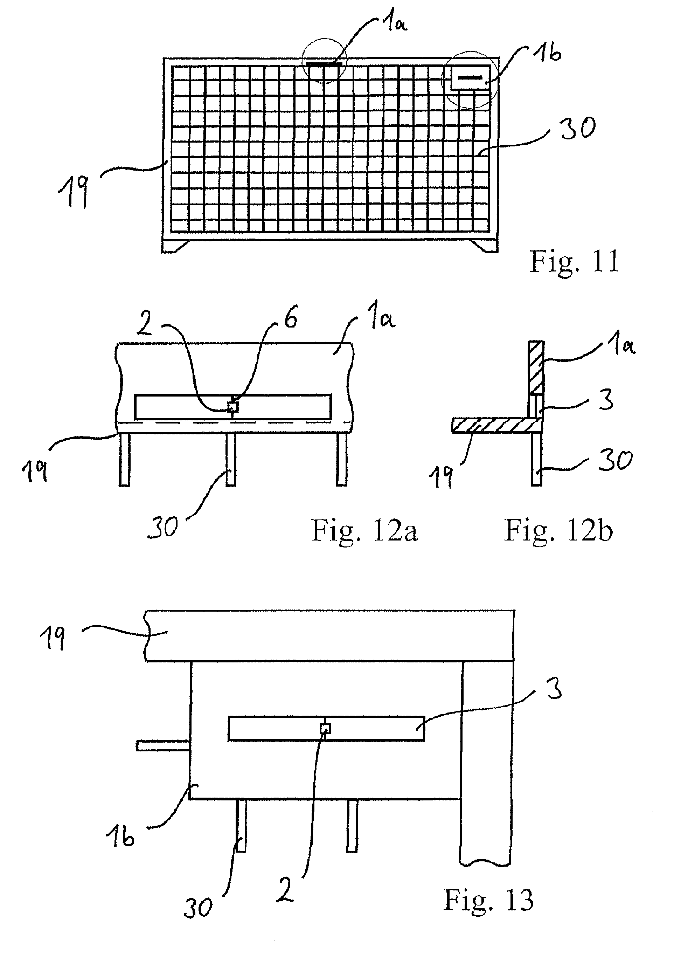

In der Fig. 11 ist eine Gitterbox 19 mit einem metallischen Bauteilen 1a und einem weiteren metallischen Bauteil 1b dargestellt. Die Gitterbox 19 weist Verstrebungen 30 auf, welche einen Innenraum der Gitterbox 19 von einem Außenraum abgrenzen. Das metallische Bauteil 1a ist in der Fig. 12a in Draufsicht und in der Fig. 12b in einer Querschnittsansicht dargestellt. Das metallische Bauteil 1a weist eine Vertiefung 3 in Form eines Durchbruchs 5 auf, in welchem ein Transponder 2 angeordnet ist. Ferner ist eine Verbindung 6 vom Transponder 2 zum Randbereichen des Durchbruchs 5 im metallischen Bauteil 1a vorgesehen. In der Fig. 13 ist das weitere metallische Bauteil 1b aus der Fig. 11 in einer Detailansicht wiedergegeben. Das weitere metallische Bauteil 1b ist in einem Eckbereich der Gitterbox 19 angeordnet und ersetzt einen Teil der Verstrebungen 30.

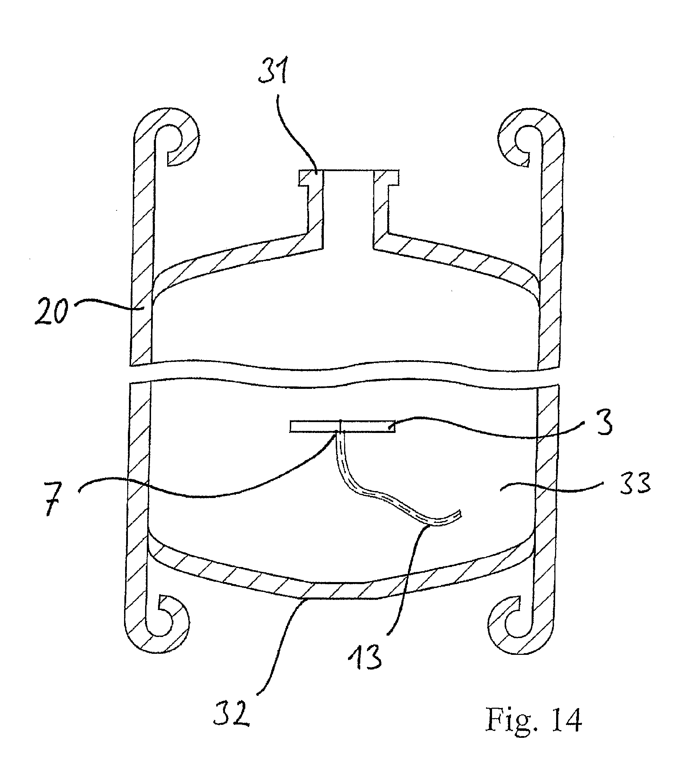

Die Querschnittsansicht in der Fig. 14 zeigt ein Getränkefaß 20 mit einer metallischen Außenwand 33. Bei dem Getränkefaß 20 handelt es sich um ein metallisches Bierfaß. Das Getränkefaß 20 weist eine Öffnung 31 und einen Faßboden 32 auf. Auf einer inneren Oberfläche der Außenwand 33 ist eine Vertiefung 3 vorgesehen, mittels welcher eine Antenne für einen Transponder gebildet ist. Mit Hilfe von Kontakten 7 ist ein Koaxialkabel 13 an einem Ende mit der so gebildeten Antenne verbunden, während das andere Ende des Koaxialkabels 13 mit einem Transponder (nicht dargestellt) verbunden wird. Wenngleich in der Fig. 14 ein Bierfaß dargestellt ist, kann jedes andere Getränkefaß 20 oder auch eine andere Form von Faß, beispielsweise für Chemikalien, verwendet werden, um mittels der Vertiefung 3 eine Antenne für den Transponder zu bilden. Das metallische Bauteil 1 kann auch als Teil anderer Getränkebehälter ausgebildet sein. Beispielsweise können auf diese Weise auch Getränkedosen oder Getränkeflaschen mit Transpondern 2 versehen werden, bei denen die Außenwand 33 zumindest teilweise aus einem metallischen Material gebildet ist. Wenn die Vertiefung in der Außenwand 33 als ein Durchbruch 5 ausgeführt ist, ist es wichtig, daß der Durchbruch 5 mit einem nichtleitenden Material gefüllt oder mit einer den Durchbruch 5 verdeckenden Schicht aus nichtleitendem Material verschlossen ist, um einem eventuellen Austritt einer von Flüssigkeit aus dem Getränkefaß 20 vorzubeugen.

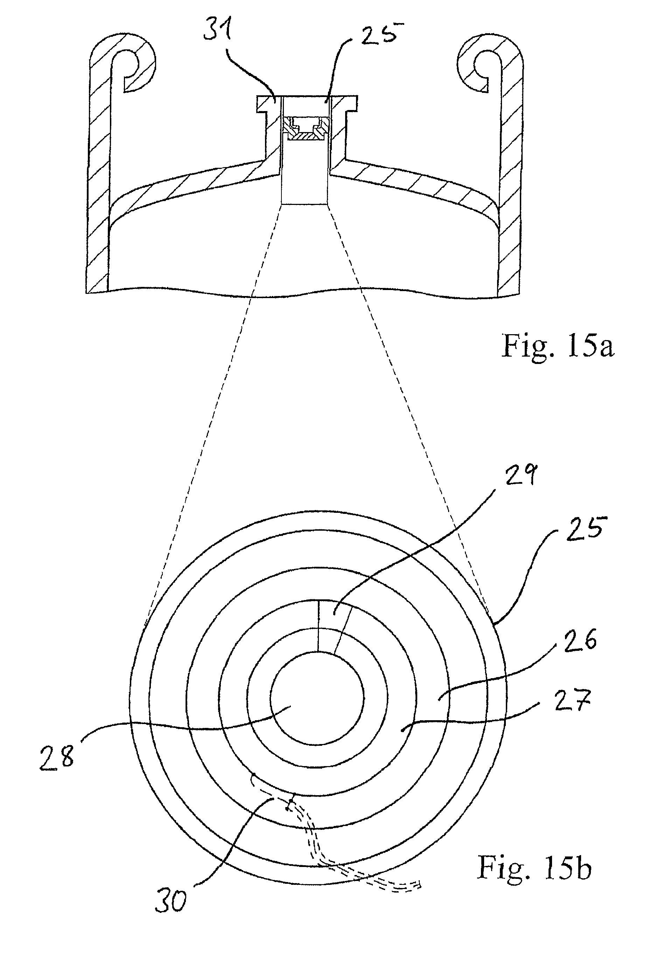

Die Fig. 15a zeigt ein Getränkefaß 20 mit einem Verschluß 25 (auch als Fitting bezeichnet) mit einer Antennenstruktur für einen Transponder 2, während in der Fig. 15 eine Detailansicht auf die Antennenstruktur des Verschlusses 25 aus der Fig. 15a dargestellt ist. Die in den Fig. 15a und 15b offenbarte Antennenstruktur ist eine Alternative zu der vorangehend beschriebenen Antenne, welche mittels der Vertiefung 3 im metallischen Bauteil 1 gebildet ist.

Die Antennenstruktur ist mittels eines ringförmigen Bauteils 27 aus leitendem Material gebildet. An einem Bereich des ringförmigen Bauteils 27, vorzugsweise einem Randbereich, ist eine Kontaktierung 30 vorgesehen, mittels welcher beispielsweise über ein Koaxialkabel 13 eine Verbindung mit einem Transponder 2 hergestellt ist.

Vorzugsweise weist das ringförmige Bauteil 27 eine Unterbrechung 29 auf, welche aus einem elektrisch nichtleitendem Material geformt ist. In diesem Fall sollte die Kontaktierung 30 vorzugsweise an einem Bereich des ringförmigen Bauteils 27 vorgesehen sein, der der Unterbrechung 29 gegenüber liegt.

Bevorzugterweise umfaßt das ringförmige Bauteil 27 eine Leiterschleife, welche in einem elektrisch nichtleitenden ringförmigen Bauelement angeordnet ist.

In einer bevorzugten Variante ist ein flächiges Element 28 aus elektrisch nichtleitendem oder leitendem Material, beispielsweise aus Kunststoff oder aus Metall, vorgesehen, das vom ringförmigen Bauteil 27 umgeben ist.

Die hier vorgestellte, in der Verschlußkappe eingebaute Antennenstruktur kann auch bei Verschlüssen anderer Getränkebehälter eingesetzt werden. Sie kann jedoch auch unabhängig von Behältern oder deren Verschlüssen als eigenständige Antenne für Transponder 2 eingesetzt werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Anordnung mit:
- einem Transponder (2) und
- einem dem Transponder (2) zugeordneten metallischen Bauteil (1), wobei mittels einer Vertiefung (3) in dem metallischen Bauteil (1) eine Antenne für den Transponder (2) gebildet ist, wobei die Vertiefung (3) mit einem Durchbruch (5) gebildet ist,
dadurch **gekennzeichnet**, dass
- der Vertiefung (3) eine Abdeckung (17) zugeordnet ist, wobei ein Hohlraum (23) gebildet ist, welcher von der Abdeckung (17) und einer Region des metallischen Bauteils, in welcher die Vertiefung (3) ausgebildet ist, eingeschlossen ist,
- der Hohlraum zumindest teilweise mit einem dielektrischen Material gefüllt ist, und
- die Abdeckung (17) ein metallisches Material umfasst.

2. Anordnung nach Anspruch 1, dadurch **gekennzeichnet**, dass die Abdeckung (17) ein nicht metallisches Material umfasst.

3. Anordnung nach Anspruch 2, dadurch **gekennzeichnet**, dass das dielektrische Material im Hohlraum (23) aus dem gleichen Material gebildet ist wie das nicht metallische Material der Abdeckung (17).

4. Anordnung nach einem der Ansprüche 2 bis 3, dadurch **gekennzeichnet**, dass die Abdeckung (17) und / oder das dielektrische Material im Hohlraum (23) als eine Abschirmung gebildet sind / ist.

5. Anordnung nach einem der vorangehenden Ansprüche, dadurch **gekennzeichnet**, dass die mittels der Vertiefung (3) im metallischen Bauteil (1) gebildete Antenne als Hochfrequenzantenne und der Transponder (2) als Hochfrequenztransponder ausgeführt sind.

6. Anordnung nach einem der vorangehenden Ansprüche, dadurch **gekennzeichnet**, dass der Transponder (2) am metallischen Bauteil (1) befestigt ist.

7. Anordnung nach einem der vorangehenden Anspruch, dadurch **gekennzeich**net, dass der Transponder (2) die Vertiefung (3) wenigstens teilweise bedeckt.

8. Anordnung nach einem der vorangehenden Ansprüche, dadurch **gekennzeichnet**, dass die Vertiefung (3) im metallischen Bauteil (1) eine gestreckte Form aufweist.

9. Anordnung nach einem der Ansprüche 1 bis 7, dadurch **gekennzeichnet**, dass die Vertiefung (3) im metallischen Bauteil (1) die Form eines Ringsegmentes aufweist.

10. Anordnung nach einem der vorangehenden Ansprüche, dadurch **gekennzeichnet**, dass zwischen dem Transponder (2) und der mittels der Vertiefung (3) im metallischen Bauteil (1) gebildeten Antenne eine Verbindung (6) zum Übertragen von Signalen gebildet ist.

11. Anordnung nach Anspruch 10, dadurch **gekennzeichnet**, dass die Verbindung (6) eine kapazitive und / oder eine induktive Kopplung umfasst.

12. Anordnung nach Anspruch 10 oder 11, dadurch **gekennzeichnet**, dass die Verbindung (6) mittels Kontakten (7) gebildet ist.

13. Anordnung nach einem der Ansprüche 10 bis 12, dadurch **gekennzeichnet**, dass die Verbindung (6) ein Koaxialkabel (13) umfasst.

14. Anordnung nach einem der vorangehenden Ansprüche, dadurch **gekennzeichnet**, dass der Transponder (2) zumindest teilweise in der Vertiefung (3) im metallschen Bauteil (1) angeordnet ist.

15. Anordnung nach Anspruch 14, dadurch **gekennzeichnet**, dass der Transponder (2) vollständig in der Vertiefung (3) im metallischen Bauteil (1) versenkt ist.

16. Anordnung nach einem der vorangehenden Ansprüche, dadurch **gekennzeichnet**, dass die Vertiefung (3) im metallischen Bauteil (1) mit einem nichtleitenden Material teilweise oder vollständig ausgefüllt ist.

17. Anordnung nach Anspruch 16, dadurch **gekennzeichnet**, dass die Vertiefung (3) im metallischen Bauteil (1) mit dem nichtleitenden Material zumindest bis zu einer Dicke aufgefüllt ist, die ein Fünfzigstel so groß ist, wie die Wellenlänge der elektromagnetischen Signale, für welche die mittels der Vertiefung (3) im metallischen Bauteil (1) gebildete Antenne ausgelegt ist.

18. Anordnung nach einem der vorangehenden Ansprüche, dadurch **gekennzeichnet**, dass das metallische Bauteil (1) mit der Vertiefung (3) Teil eines rohrförmigen Bauteils (15) ist.

19. Anordnung nach Anspruch 18, dadurch **gekennzeichnet**, dass die Vertiefung (3) entlang der Längsachse des rohrförmigen Bauteils (15) gebildet ist.

20. Anordnung nach einem der vorangehenden Ansprüche, dadurch **gekennzeichnet**, dass das metallische Bauteil (1) mit der Vertiefung (3) Teil eines Behälters ist.

21. Anordnung nach Anspruch 20, dadurch **gekennzeichnet**, dass der Behälter eine Gitterbox (19) umfasst.

22. Anordnung nach Anspruch 20, dadurch **gekennzeichnet**, dass der Behälter ein Getränkefaß (20) ist.

23. Anordnung nach einem der Ansprüche 1 bis 19, dadurch **gekennzeichnet**, dass das metallische Bauteil (1) mit der Vertiefung (3) Teil eines Kraftfahrzeugkennzeichens (18) ist.

24. Anordnung nach einem der vorangehenden Ansprüche, dadurch **gekennzeichnet**, dass der Transponder (2) eine weitere Antenne umfasst.

## Claims

1. Arrangement with:
- a transponder (2) and
- a metal component (1) allocated to the transponder (2), wherein an aerial for the transponder (2) is formed by means of a recess (3) in the metal component (1), wherein the recess (3) is formed with a breakthrough (5),
**characterised in that**
- a cover (17) is allocated to the recess (3), wherein a cavity (23) is formed which is enclosed by the cover (17) and a region of the metal component (1) in which the cavity (23) is formed,
- the cavity (23) is at least partially filled with a dielectric material, and
- the cover (17) comprises a metallic material.

2. Arrangement according to claim 1, **characterised in that** the cover (17) comprises a non-metallic material.

3. Arrangement according to claim 2, **characterised in that** the dielectric material in the cavity (23) is formed from the same material as the non-metallic material of the cover (17).

4. Arrangement according to one of the claims 2 or 3, **characterised in that** the cover and/or the dielectric material in the cavity (23) are/is formed as a screening.

5. Arrangement according to any one of the preceding claims, **characterised in that** the aerial formed by means of the recess (3) in the metal component (1) is executed as a high frequency aerial and the transponder (2) is executed as a high frequency transponder.

6. Arrangement according to any one of the preceding claims, **characterised in that** the transponder (2) is secured to the metal component (1).

7. Arrangement according to any one of the preceding claims, **characterised in that** the transponder (2) at least partially covers the recess (3).

8. Arrangement according to any one of the preceding claims, **characterised in that** the recess (3) in the metal component (1) has an extended form.

9. Arrangement according to any one of the claims 1 to 7, **characterised in that** the recess (3) in the metal component (1) has the form of a ring segment.

10. Arrangement according to any one of the preceding claims, **characterised in that** a connection (6) for transmitting signals is formed between the transponder (2) and the aerial formed by means of the recess (3) in the metal component (1).

11. Arrangement according to claim 10, **characterised in that** the connection (6) comprises a capacitive and/or an inductive coupling.

12. Arrangement according to claim 10 or 11, **characterised in that** the connection (6) is formed by means of contacts (7).

13. Arrangement according to any one of the claims 10 to 12, **characterised in that** the connection (6) comprises a coaxial cable (13).

14. Arrangement according to any one of the preceding claims, **characterised in that** the transponder (2) is at least partially arranged in the recess (3) in the metal component (1).

15. Arrangement according to claim 14, **characterised in that** the transponder (2) is submerged fully in the recess (3) in the metal component (1).

16. Arrangement according to any one of the preceding claims, **characterised in that** the recess (3) in the metal component (1) is partially or fully filled with a non-conductive material.

17. Arrangement according to claim 16, **characterised in that** the recess (3) in the metal component (1) is filled up with the non-conductive material, at least up to a thickness which is one fiftieth as large as the wavelength of the electromagnetic signals for which the aerial, formed by the recess (3) in the metal component (1), is designed.

18. Arrangement according to any one of the preceding claims, **characterised in that** the metal component (1) with the recess (3) is part of a pipe-shaped component (15).

19. Arrangement according to claim 18, **characterised in that** the recess (3) is formed along the longitudinal axis of the pipe-shaped component (15).

20. Arrangement according to any one of the preceding claims, **characterised in that** the metal component (1) with the recess (3) is part of a container.

21. Arrangement according to claim 20, **characterised in that** the container comprises a grid box (19).

22. Arrangement according to claim 20, **characterised in that** the container is a beverage barrel (20).

23. Arrangement according to any one of the claims 1 to 19, **characterised in that** the metal component (1) with the recess (3) is part of a motor vehicle registration plate (18).

24. Arrangement according to any one of the preceding claims, **characterised in that** the transponder (2) comprises a further aerial.

## Revendications

1. Système avec :
- un transpondeur (2) et
- un élément métallique (1) associé au transpondeur (2), une antenne pour le transpondeur (2) étant réalisée au moyen d'une cavité (3) dans l'élément métallique (1), la cavité (3) étant formée avec un passage (5),
**caractérisé en ce que**
- une couverture (17) est associée à la cavité (3), moyennant quoi un espace creux (23) est formé, lequel est enfermé par la couverture (17) et une zone de l'élément métallique dans laquelle la cavité (3) est formée,
- l'espace creux étant au moins en partie rempli avec un matériau diélectrique, et
- la couverture (17) comprenant un matériau métallique.

2. Système selon la revendication 1, **caractérisé en ce que** la couverture (17) comprend un matériau non métallique.

3. Système selon la revendication 2, **caractérisé en ce que** le matériau diélectrique dans l'espace creux (23) est formé avec le même matériau que le matériau non métallique de la couverture (17).

4. Système selon l'une des revendications 2 à 3, **caractérisé en ce que** la couverture (17) et/ou le matériau diélectrique dans l'espace creux (23) est/sont formé(s) en tant qu'un blindage.

5. Système selon l'une des revendications précédentes, **caractérisé en ce que** l'antenne formée au moyen de la cavité (3) dans l'élément métallique (1) est réalisée en tant qu'antenne de haute fréquence et le transpondeur (2), en tant que transpondeur de haute fréquence.

6. Système selon l'une des revendications précédentes, **caractérisé en ce que** le transpondeur (2) est fixé sur l'élément métallique (1).

7. Système selon l'une des revendications précédentes, **caractérisé en ce que** le transpondeur (2) recouvre au moins partiellement la cavité (3).

8. Système selon l'une des revendications précédentes, **caractérisé en ce que** la cavité (3) dans l'élément métallique (1) présente une forme étirée.

9. Système selon l'une des revendications 1 à 7, **caractérisé en ce que** la cavité (3) dans l'élément métallique (1) présente la forme d'un segment annulaire.

10. Système selon l'une des revendications précédentes, **caractérisé en ce qu'**une liaison (6) pour la transmission de signaux est formée entre le transpondeur (2) et l'antenne formée au moyen de la cavité (3) dans l'élément métallique (1).

11. Système selon la revendication 10, **caractérisé en ce que** la liaison (6) comprend un couplage capacitif et/ou inductif.

12. Système selon la revendication 10 ou 11, **caractérisé en ce que** la liaison (6) est formée au moyen de contacts (7).

13. Système selon l'une des revendications 10 à 12, **caractérisé en ce que** la liaison (6) comprend un câble coaxial (13).

14. Système selon l'une des revendications précédentes, **caractérisé en ce que** le transpondeur (2) est disposé au moins en partie dans la cavité (3) dans l'élément métallique (1).

15. Système selon la revendication 14, **caractérisé en ce que** le transpondeur (2) est complètement noyé dans la cavité (3) dans l'élément métallique (1).

16. Système selon l'une des revendications précédentes, **caractérisé en ce que** la cavité (3) dans l'élément métallique (1) est partiellement ou complètement remplie avec un matériau non conducteur.

17. Système selon la revendication 16, **caractérisé en ce que** la cavité (3) dans l'élément métallique (1) est remplie avec le matériau non conducteur au moins jusqu'à une épaisseur qui est de l'ordre d'un cinquantième de la longueur d'onde des signaux électromagnétiques pour lesquels l'antenne formée au moyen de la cavité (3) dans l'élément métallique (1) est conçue.

18. Système selon l'une des revendications précédentes, **caractérisé en ce que** l'élément métallique (1) avec la cavité (3) constitue une partie d'un élément tubulaire (15).

19. Système selon la revendication 18, **caractérisé en ce que** la cavité (3) est formée le long de l'axe longitudinal de l'élément tubulaire (15).

20. Système selon l'une des revendications précédentes, **caractérisé en ce que** l'élément métallique (1) avec la cavité (3) constitue une partie d'un conteneur.

21. Système selon la revendication 20, **caractérisé en ce que** le conteneur comprend un box grillagé (19).

22. Système selon la revendication 20, **caractérisé en ce que** le conteneur est un fût de boissons (20).

23. Système selon l'une des revendications 1 à 19, **caractérisé en ce que** l'élément métallique (1) avec la cavité (3) est une partie d'une plaque minéralogique (18).

24. Système selon l'une des revendications précédentes, **caractérisé en ce que** le transpondeur (2) comprend une autre antenne.
